(19) Europäisches Patentamt
European Patent Office
Office européen des brevets

(11) **EP 2 936 082 B1**

(12) **EUROPÄISCHE PATENTSCHRIFT**

(45) Veröffentlichungstag und Bekanntmachung des Hinweises auf die Patenterteilung:
**08.07.2020   Patentblatt 2020/28**

(51) Int Cl.:
*G01F 1/74* (2006.01)   *G01F 1/32* (2006.01)

(21) Anmeldenummer: **13796048.0**

(22) Anmeldetag: **25.11.2013**

(86) Internationale Anmeldenummer:
**PCT/EP2013/074636**

(87) Internationale Veröffentlichungsnummer:
**WO 2014/095248 (26.06.2014 Gazette 2014/26)**

(54) **VERFAHREN UND WIRBELSTRÖMUNGSMESSGERÄT ZUR BESTIMMUNG DES MASSENSTROMVERHÄLTNISSES EINER MEHRPHASIGEN STRÖMUNG**

VORTEX FLOW METER AND METHOD FOR MEASURING THE VOID FRACTIONS OF A MULTIPHASE FLOW

DÉBITMÈTRE A VORTEX ET PROCÉDÉ DE MESURE DU TAUX DE VIDE D'UN ÉCOULEMENT MULTIPHASIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012   DE 102012112976**

(43) Veröffentlichungstag der Anmeldung:
**28.10.2015   Patentblatt 2015/44**

(73) Patentinhaber: **Endress+Hauser Flowtec AG**
**4153 Reinach (BL) (CH)**

(72) Erfinder:
• **GOSSWEILER, Christoph**
  **CH-8404 Winterthur (CH)**
• **HÖCKER, Rainer**
  **79761 Waldshut (DE)**
• **HOLLMACH, Marc**
  **CH-4056 Basel (CH)**
• **KÄHR, Christian**
  **CH-5034 Suhr (CH)**
• **KRAUSS, Silvio**
  **CH-5425 Schneisingen (CH)**
• **SÜTTERLIN, Dirk**
  **79650 Schopfheim (DE)**
• **WYMANN, Daniel**
  **CH-5425 Schneisingen (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
WO-A1-2009/012230    WO-A2-2007/134009
WO-A2-2007/136788    DE-A1-102009 001 525
US-A- 4 876 897

**Beschreibung**

Die Erfindung betrifft ein Verfahren zur Bestimmung des Massenstromverhältnisses gemäß dem Oberbegriff des Anspruchs 1 und ein Wirbelströmungsmessgerät gemäß dem Oberbegriff des Anspruchs 15.

Aus dem Stand der Technik sind für die Durchflussmessung eines fluiden Mediums, zumeist Gasströmungen oder Dampfströmungen im Hochtemperaturbereich, in Rohrleitungen verschiedener Messgeräte bekannt. Die Strömungen können zumindest zeitweise als zwei- oder mehrphasige Strömungen des fluiden Mediums vorliegen. Sie beinhalten dabei eine erste und eine zweite Phase, wobei die erste Phase zumeist ein Gas, wie bspw. Wasserdampf, und die zweite Phase ein Kondensat, wie bspw. Wasser, beinhaltet. Diese Art von Strömungen können durch Messvorrichtungen, wie Venturi-Düsen, Blenden oder Konus-Differenzdruckmeter gemessen werden. Dabei wird vornehmlich der Volumenstrom $\dot{V}$ des Gases in der zumindest zeitweise zwei- oder mehrphasigen Strömung gemessen und ist dabei unmittelbar vom Massenstrom $\dot{m}_G$, der den Transport eines Mediums in einer Zeiteinheit durch einen definierten Querschnitt bezeichnet, und der reziproken Dichte abhängig:

$$\dot{V} = \frac{dm}{dt} \bigg/ \rho = \frac{\dot{m}_G}{\rho}. \tag{1}$$

Ferner sind aus dem Stand der Technik Wirbelströmungsmessgeräte bekannt, die auf dem Prinzip der Kármán'schen Wirbelstraße basieren und bisher für einphasige Strömungen eingesetzt wurden. Jedoch können diese Messgeräte auch für zweiphasige oder mehrphasige Strömungen eingesetzt werden.

Die DE 10 2009 001 525 A1 sowie die DE 10 2009 001 526 A1 beschreiben solche Wirbelströmungsmessgeräte zum Überwachen und Messen eines in einer Rohrleitung strömenden, zeitweise zwei- oder mehrphasigen Mediums. Dabei offenbart die DE 10 2009 001 526 A1 ein Messgerät mit einer Rohrleitung, in die zumindest ein Messrohr einsetzbar ist. Ferner sind ein Staukörper und ein Wirbelsensor, der auf die auftretenden Druckschwankungen anspricht und diese in elektrische Signale wandelt.

Die DE 10 2009 001 525 A1 beschreibt ein Verfahren zum Überwachen bzw. Messen eines vorgenannten Mediums, wobei Kärmän'sche Wirbel im strömenden Medium erzeugt werden. Die Wirbel lösen sich vom Staukörper mit einer Wirbelablösefrequenz $f_V$ (auch Vortexfrequenz genannt) ab, die von einer momentanen Strömungsgeschwindigkeit des strömenden Mediums abhängt. Die durch die Wirbel erzeugten Druckschwankungen werden vom Wirbelsensor erfasst. Aus der Wirbelablösefrequenz $f_V$ kann der Volumenstrom der gasförmigen, ersten Phase bestimmt werden. Aus dem Sensorsignal S wird ferner eine Nutzsignalkomponente M mit einem schmalen Frequenzband selektiert. Die relative Bandbreite ist dabei kleiner als 50 % der momentanen Wirbelablösefrequenz $f_V$. Mittels der Nutzsignalkomponente kann basierend auf einer Standardabweichung eines Amplitudenverlaufs und/oder einer Kurtosis der Nutzsignalkomponente und/oder der Empfindlichkeit des Wirbelsensors ein Volumenstrom der zweiten, flüssigen Phase berechnet werden.

Bei der Durchflussmessung mit einem Wirbelströmungsmessgerät ergibt sich während der Messung einer zumindest zeitweise zwei- oder mehrphasigen Strömung ein vom Massenstromanteil der Flüssigphase abhängiger Messfehler der bis zu einem Vielfachen der Messunsicherheit des Wirbelströmungsmessgerät und somit mehrere Prozent betragen kann. Dieser Messfehler wird mit ansteigendem vom Massenstromanteil der flüssigen Phase größer,

$$E_m = \frac{\dot{m}_{G,Vortex} - \dot{m}_G}{\dot{m}_{G,Vortex}}, \tag{2}$$

wobei $E_m$ den Messfehler, $\dot{m}_{G,Vortex}$ den gemessenen Massenstrom und $\dot{m}_G$ den Massenstrom der gasförmigen Phase bezeichnet.

Ausgehend von diesem Stand der Technik liegt der vorliegenden Erfindung die Aufgabe zugrunde, Messfehler verursacht durch den Massenstromanteils der Flüssigphase der Gasphase zu reduzieren und eine exakte Messung des Volumenstroms der gasförmigen Phase und hieraus abgeleitete Messgrössen, insbesondere Massenstrom der Gasphase, zu ermöglichen.

Diese Aufgabe wird durch ein Durchflussmess-Verfahren zur Bestimmung des Massenstromverhältnisses x mit den Merkmalen des unabhängigen Anspruchs 1 gelöst.

Die weitere Aufgabe, ein Wirbelströmungsmessgerät bereitzustellen, die eine einfache und dabei schnelle Messung der Durchflussrate einer gasförmigen Phase in einer zumindest zeitweise zwei- oder mehrphasige Strömung ermöglicht, wird durch ein Wirbelströmungsmessgerät mit den Merkmalen des unabhängigen Anspruchs 15 gelöst.

Bevorzugte Ausführungsformen werden durch die Unteransprüche beschrieben.

Das erfindungsgemäße Verfahren beschreibt ein Verfahren zur Bestimmung des Massenstromverhältnisses (x) eines in einem Messrohr strömenden Mediums bestehend aus mehreren gasförmigen und flüssigen Phasen, wobei zumindest zeitweise neben der gasförmigen Phase eine Phase flüssig sein kann, in einem Wirbelströmungsmessgerät mit einem Sensor zur Erzeugung eines zu einer Wirbelablösefrequenz $f_v$ korrelierten Sensorsignals S. Dabei weist die gasförmige Phase eine erste Dichte ($\rho_G$) auf, die typischerweise von einer zweiten Dichte ($\rho_L$) der flüssigen Phase verschieden ist. In einem ersten Schritt erfolgt ein Erzeugen von Kármán'schen Wirbelstrasse im strömenden Medium zumindest im Bereich des Wirbelsensors mittels des Staukörpers, wobei die Wirbel mit einer von einer momentanen Strömungsgeschwindigkeit des strömenden Mediums abhängigen Wirbelablösefrequenz ($f_v$) vom Staukörper abgelöst werden. In einem zweiten Schritt erfolgt das Erfassen von durch die Kármán'schen Wirbel im strömenden Medium verursachten periodischen Druckschwankungen mittels des Wirbelsensors zum Erzeugen eines den Druckschwankungen korrespondierenden Sensorsignals S. Ferner wird in einem dritten Schritt eine Nutzsignalkomponente M aus dem Sensorsignal S selektiert, das ein, insbesondere schmales, die Wirbelablösefrequenz enthaltendes Frequenzband aufweist, insbesondere mit einer relativen Bandbreite kleiner als 50% der momentanen Wirbelablösefrequenz, wobei vorzugsweise die momentane Wirbelablösefrequenz der Mittenfrequenz der Frequenzbandbreite entspricht. Hiernach kann die Nutzsignalkomponente (M) zum Bestimmen eines Massenstromverhältnisses (x) des strömenden Mediums verwendet werden, wobei das Massenstromverhältnis (x) als ein Verhältnis des ersten Massenstroms $\dot{m}_G$ der gasförmigen Phase zu einem Gesamtmassenstrom mit dem das Medium strömt definiert ist, insb. gemäss einer Rechenvorschrift:

$$ x = \frac{\dot{m}_G}{\dot{m}_L + \dot{m}_G} \; . $$

Mit dem erfindungsgemäßen Verfahren ist es möglich, einen Messfehler $E_m$ beim Messen des Massen- und Volumenstroms der gasförmigen Phase(n) im Falle einer vorliegenden mehrphasigen Strömung - im Vergleich zu bisherigen Verfahren deutlich zu reduzieren. Hierbei ist der Vorteil, dass das Massenstromverhältnis dem Anwender nicht bekannt sein muss, da diese Information aus dem Sensorsignal S hervorgeht. Ferner kann eine eindeutige und stabile Verwertung des Messsignals erfolgen, indem eine Auswertung unabhängig vom Amplitudenwert des Signals durchgeführt werden kann.

Ferner kann erfindungsgemäß vorgesehen sein, dass das Bestimmen der ersten Dichte $\rho_G$ der gasförmigen Phase oder der zweiten Dichte $\rho_L$ der flüssigen Phase durch Eingeben oder durch Messen mit der Dichte korrelierender Parameter, insbesondere einer Temperatur oder eines Drucks innerhalb des zweiphasigen Mediums, erfolgen kann. Dazu können beide Dichten $\rho_L$, $\rho_G$ extern über eine Datenverarbeitungseinheit, die mit dem Messgerät operativ verbunden werden kann, ein- oder vorgegeben werden, was insbesondere bei bekannten Medien vorteilhaft ist. Alternativ können die Dichten einzeln oder mittels geeigneter Sensoren während einer Kalibrierung vorbestimmt oder auch während der Messung direkt im Messgerät gemessen werden. Damit können auch zeitabhängige Schwankungen der Dichten erfasst werden. Des Weiteren können auch die mit der Dichte korrelierten Messgrössen Dichte und/oder Temperatur in die Datnenverarbeitungseinheit mittels einer Ein/Ausgabeeinheit über Feldbusschnittstellen (z.B. 4.20mA, HART, PA,FF) von anderen Messgeräten eingelesen werden.

Bevorzugt kann die Wirbelablösefrequenz $f_V$ mittels einer im Messgerät befindlichen Auswerte-Elektronik bestimmt werden, wie es allgemein bei Wirbelströmungsmessgeräten bekannt ist. Über die Wirbelablösefrequenz $f_V$ wiederum kann dann mittels der Auswerte-Elektronik in bekannter Weise die Strömungsgeschwindigkeit der gasförmigen Phase eines in einer Rohrleitung strömenden zweiphasigen Mediums bestimmt werden.

Die Auswerte-Elektronik kann darüber hinaus aber auch eine quantitative Bestimmung der Wandströmung durchführen, wie insbesondere in der DE 10 2009 001 526 A1 beschrieben ist. Auf diese Detektion bzw. quantitative Bestimmung wird hier nicht nochmals explizit eingegangen.

Es hat sich als vorteilhaft erwiesen die Nutzsignalkomponente aus dem Sensorsignal S um die Wirbelablösefrequenz $f_V$ herum schmalbandig mittels eines dafür geeigneten Filters zu selektieren, wobei eine relative Bandbreite kleiner als 50 % einer Mittenfrequenz, die der Wirbelablösefrequenz entspricht, sein kann. Es sind jedoch auch Anpassungen an die Bandbreite je nach Anforderung an die zu verwendende Nutzsignalkomponente möglich. Mittels einer selektiven Filterung können nur die Frequenzbereiche im Bereich um die Wirbelablösefrequenz $f_V$ herum berücksichtigt werden, womit Störanteile mit Frequenzen, die sich von der Wirbelablösefrequenz $f_V$ unterscheiden, herausgefiltert werden.

Erfindungsgemäß wird die zeitlich abhängige Nutzsignalkomponente M als solches im Ganzen verwendet, und hieraus die oben genannten Größen bestimmt. Die Nutzsignalkomponente M besteht aus einem nach bestimmten Zeitpunkten abgetasteten, amplitudenbezogenen Signal und kann als solches angenähert durch folgenden Zusammenhang betrachtet werden:

$$M(t) = A_0(t) \cdot \sin(\omega(t)) \quad , \tag{3}$$

wobei $A_0$ die zeitabhängige Amplitude und $\omega$ die zeitabhängige Phase der Sinusschwingung bezeichnet, welche hier näherungsweise für die Phase der Vortexschwingung steht. Insbesondere werden die zeitlichen Schwankungen des sinusförmigen Signals an jedem Signalwert zu Rate gezogen, wozu in einem weiteren Schritt das Bestimmen wenigstens eines Schwankungswertes der Nutzsignalkomponente (M) über ein Zeitintervall, wobei die Nutzsignalkomponente (M) im Zeitintervall vorzugsweise mehr als eine Periode der Druckschwankungen der Strömung umfasst, erfolgen kann. Der Vorteil durch das Verwenden von Schwankungswerten der Nutzsignalkomponente ist, dass diese zeitlichen Schwankungen eine stabilere Information über den Zustand der Strömung liefern als die reine Verwendung der Amplitude des Sensorsignals oder der Nutzsignalkomponente, da das ganze zur Verfügung stehende Signal zur Auswertung herangezogen wird und nicht nur die Maximalwerte oder alternativ die RMS-Werte, wie es bei einem Amplituden-Messverfahren der Fall ist. Alternativ kann auch das Sensorsignal S direkt mit der vollen Bandbreite ausgewertet werden. Jedoch ergeben sich hier Nachteile, da möglichweise zusätzliche Störkomponenten im Signal enthalten sein können, die die Auswertung der Schwankungswerte massgeblich beeinflussen und zu fehlerhafter Bestimmung des Massenstromverhältnisses führen können.

In einem Wirbeldurchflussmesssystem bemisst sich der Volumenstrom $\dot{V}$ im Wesentlichen aus der Wirbelablösefrequenz $f_v$. Letztere kann dazu verwendet werden, eine Strömungsgeschwindigkeit zu berechnen, die in erster Näherung direkt proportional zum Volumenstrom V des Mediums ist. Aus dem Volumenstrom kann in einer Weiterbildung der Erfindung auch ein reiner Massenstrom $\dot{m}$ der gasförmigen Phase bestimmt und ausgegeben werden.

Um zutreffende Aussagen über das Massenstromverhältnis der mehrphasigen Strömung treffen zu können, ist es notwendig, dass zuvor eine statistische Auswertung der aus dem Sensorsignal S selektierten Nutzssignalkomponente erfolgt. Hierbei sieht die Erfindung bevorzugt vor, dass in einem weiteren Schritt die Bestimmung wenigstens eines Schwankungswertes der Nutzsignalkomponente (M) über ein Zeitintervall, wobei die Nutzsignalkomponente (M) im Zeitintervall vorzugsweise mehr als eine Periode der Druckschwankungen der Strömung umfasst, insb. eine Standardabweichung ($\sigma$) eines Amplitudenverlaufs der Nutzsignalkomponente und/oder einer Kurtosis (Ku) der Nutzsignalkomponente, erfolgt.

Zur statistischen Auswertung kann eine Standardabweichung $\sigma$ eines Amplitudenverlaufs der Nutzsignalkomponente M sowie die Kurtosis Ku der Nutzsignalkomponente M des Sensorsignals S ermittelt werden, wie es auch in der DE 10 2009 001 525 A1 oder der DE 10 2009 001 526 A1 beschrieben wird. Die Standardabweichung $\sigma$ oder die Kurtosis Ku kann zur Ermittlung des Massenstromverhältnisses (x) der mehrphasigen Strömung herangezogen werden, wenn die Strömungsgeschwindigkeiten der gasförmigen Phase oberhalb einer zu bestimmenden minimalen Grenz-Strömungsgeschwindigkeit liegt, die ihrerseits abhängig von dem jeweiligen Wirbelströmungsmessgerät sein kann. Die Kurtosis Ku kann als normiertes viertes zentrales Moment ein Maß für die Steilheit einer statistischen Verteilung sein. Ferner sind auch die Momente Varianz und Schiefe zur weiteren Auswertung aus dem Messsignal bestimmbar.

Bevorzugt kann eine Ausführungsform der Erfindung vorsehen, dass in einem weiteren Schritt unter Verwendung der Nutzsignalkomponente M das Massenstromverhältnis x der gasförmigen Phase zu der flüssigen Phase bestimmt werden kann. Es sind diverse charakteristische Größen gegeben, um die hier vorgenommene Durchflussmessung zu beschreiben. Diese charakteristischen Größen können in Kombination verwendet werden.

Dabei ist neben der Wirbelablösefrequenz $f_v$ der Massenstromanteil x als charakteristische Größe hervorzuheben:

$$x = \frac{\dot{m}_G}{\dot{m}_L + \dot{m}_G} \equiv \frac{m_G}{m_L + m_G} \tag{4}$$

Das Verhältnis der Massenströme $\dot{m}_G$ der gasförmigen Phase und $\dot{m}_L$ der flüssigen Phase wird auch als Massenstromanteil x bezeichnet und wird in Dampfströmungen auch oft als Dampfqualität oder Dampfgehalt benannt. Er drückt das Verhältnis der Massen der beiden Phasen aus die in einer bestimmten Zeiteinheit durch den Messrohrquerschnitt strömen, wobei $m_G$ die Masse der gasförmigen Phase und $m_L$ die Masse der flüssigen Phase ist. Das Massenstromverhältnis x kann aus dem mit den Druckschwankungen korrespondierenden Sensorsignal und den allgemeinen Prozessbedingungen gewonnen werden, wobei in einer weiteren Ausführungsform der Erfindung das Massenstromverhältnis x eine Funktion einer Funktion der zeitabhängigen Nutzsignalkomponente M, der Dichten $\rho_L$, $\rho_G$ und der Wirbelablösefrequenz $f_v$ sein kann:

$$x = f(g(M(t)), \rho_G(t), \rho_L(t), f_V(t)). \tag{5}$$

Die charakteristischen Größen sind in der Regel zeitabhängig und können als solche auch zeitabhängig im Messgerät erfasst werden.

Zu Bestimmung des Massenstromverhältnis x ist eine Funktion g(M(t)) notwendig. Die Funktion g(M(t)) stellt ein Mass der Schwankungsgrösse der Nutzsignalkomponente M dar. Als Schwankungsgrösse kann insbesondere die Kurtosis Ku der Nutzsignalkomponente M oder die Standardabweichung der aus der Nutzsignalkomponente M ermittelten Amplitude $A_0(t)$ herangezogen werden.

$$g(M(t)) = Ku(M(t))$$
$$g(M(t)) = \sigma(A_0(t)) \tag{5a}$$

Zur genaueren Bestimmung von x kann zusätzlich auch die Dichten, $\rho_G(t)$, $\rho_L(t)$ und die Vortexfrequenz $f_v(t)$ herangezogen werden.

Geeigneter Weise kann x eine Funktion der Kurtosis Ku und einer Froude-Zahl, insbesondere densiometrischen, Froude-Zahl Fr' sein:

$$Fr = \frac{u_{GS}}{\sqrt{D \cdot g}}$$

$$Fr' = \sqrt{\frac{\rho_G}{\rho_L - \rho_G}} \cdot \frac{u_{GS}}{\sqrt{D \cdot g}}$$

$$x = f(Ku, Fr).$$
$$x = f(Ku, Fr') \tag{6}$$

Beispielsweise kann die Erfindung vorsehen, dass der Massenstromanteil x aus Polynomen höherer Ordnung, der vorgenannten Größen Ku und Fr oder Fr' bzw. auch nur anhand er Kurtosis Ku gebildet wird:

$$x = a_{00} + a_{10} \cdot Ku + a_{20} \cdot Ku^2 + a_{01} \cdot Fr' + a_{11} \cdot Ku \cdot Fr' + a_{21} \cdot Ku^2 \cdot Fr' + ... =$$
$$\sum_{j=0}^{M} \sum_{i=0}^{N} a_{ij} \cdot Ku^i \cdot Fr'^j \quad (N \geq 1, M \geq 0) \tag{7}$$

$$x = a_0 + a_1 \cdot Ku + a_2 \cdot Ku^2 + ... = \sum_{i=0}^{N} a_i \cdot Ku^i \quad (N \geq 1)$$

Die Koeffizienten der einzelnen Terme können in einfacher Weise durch Fit-Funktionen oder andere Approximationsfunktionen angenähert und bestimmt werden.

Die densiometrische Froude-Zahl Fr ist dabei - als Verhältnis von Trägheits- zur Schwerkraft - ein Maß bspw. für die Wellenausbreitungsgeschwindigkeit und bemisst sich gemäß

$$Fr' = \sqrt{\frac{\rho_G}{\rho_L - \rho_G}} \cdot \frac{u_{GS}}{\sqrt{D \cdot g}} \cdot \tag{8}$$

Dabei ist $u_{GS}$ eine Leer-Strömungsgeschwindigkeit und D eine charakteristische Länge des Messgeräts und entspricht insbesondere dem Durchmesser des Messrohres. Die Froude-Zahl Fr beinhaltet damit den Einfluss der Leerrohrgeschwindigkeit der gasförmigen Phase. Die Froude-Zahl Fr kann vorteilhaft unter Verwendung der Nutzsignalkomponente bestimmt werden. Dazu kann die Leer-Strömungsgeschwindigkeit $u_{GS} = \dfrac{\dot{m}_G}{\rho_G \cdot A_M}$ im Rohr mit Querschnittsfläche $A_M$ aus der Wirbelablösefrequenz $f_v$ bestimmt werden. Die Dichten $\rho_G$, $\rho_L$ der beiden Phasen spielt ebenfalls eine Rolle.

In einer Weiterbildung der Erfindung kann alternativ die Empfindlichkeit c eines Sensors als Maß dienen, um das Massenstromverhältnis x aus dem Sensorsignal S erhalten zu können. Dabei kann bei einem sinusförmigen Signal die Empfindlichkeit c aus der Steigung im Nulldurchgang und der Frequenz des Sensorsignals S geschätzt werden. Vorzugsweise wird anstelle des Sensorsignals hierzu die Nutzsignalkomponente M verwendet:

$$c = \frac{\left| \dfrac{dM}{dt} \right|_{M=0}}{\rho_G f_v^3} . \tag{9}$$

Aus der Empfindlichkeit c des Sensors lässt sich auch eine Amplitude A' ableiten, selbst wenn das sinusförmige Signal gesättigt ist und eher wie ein Rechtecksignal aussieht. Eine abgeleitete Amplitude A' könnte wie folgt abgeschätzt werden:

$$A' = \frac{c \rho_G f_v}{2\pi} . \tag{10}$$

Damit können weiterführende Größen bestimmt werden oder die bisherigen Berechnungen im Vergleich zur herkömmlichen Auswertung über den Amplitudenwert des Messsignals überprüft werden. Durch Nutzen der Empfindlichkeit c kann die Amplitude aus dem Berechnungsformalismus herausfallen und muss daher für die vorliegend dargestellte Volumenstrombestimmung nicht herangezogen werden. Der Volumenstrom $\dot{V}$ kann damit unabhängig von einer Signalsättigung ermittelt werden.

Damit ein Messfehler $E_m$ des gemessenen Volumenstroms der gasförmigen Phase $\dot{V}_G$ in einer mehrphasigen Strömung reduziert werden kann, wird ein Korrekturwert $K_G$ benötigt. Zur Bestimmung eines geeigneten Korrekturwerts $K_G = f(x, Fr)$ kann Gleichung (2) zunächst umgestellt werden:

$$\dot{m}_G = \dot{m}_{G,Vortex} \cdot (1 - E_m) . \tag{11}$$

Erfindungsgemäß ist es möglich, den Messfehler $E_m$ rein in Abhängigkeit vom Massenstromanteil x und der Froude-Zahl Fr, insbesondere der densiometrischen Froude-Zahl zu beschreiben, so dass der Messfehler $E_m$ unabhängig von einem Druck p in der Leitung wird.

Bevorzugt kann eine Ausführungsform der Erfindung nun vorsehen, dass in einem weiteren Schritt ein Korrekturwert $K_G$ in Abhängigkeit des Massenstromverhältnisses x bestimmt wird und hiernach in einem nächsten Schritt der Volumenstrom der gasförmigen Phase $\dot{V}_G$ mittels dem Korrekturwert $K_G$ korrigiert wird.

Zur Bestimmung des Korrekturwerts $K_G$ kann ferner vorgesehen sein, dass der Korrekturwert $K_G$ aus einem Polynom zweiten Grades des Massenstromverhältnisses x erstellt wird.

$$K_G = b_0 + b_1 \cdot x + b_2 \cdot x^2 . \tag{12}$$

Die Koeffizienten $b_0$, $b_1$ und $b_2$ sind wiederum einfach mittels bekannter Näherungsverfahren zu bestimmen. In einer Weiterbildung kann der Korrekturwert $K_G$ auch von der Froude-Zahl Fr abhängig sein, wozu weitere Terme der Funktion hinzugefügt werden können. Dazu können weitere von der Froude-Zahl Fr abhängige polynomische Terme, bevorzugt zweiten Grades, an die Korrekturfunktion angehängt werden.

Der Volumenstrom der gasförmigen Phase $\dot{V}_G$ kann mittels $K_G$ wie folgt in einfacher Weise korrigiert werden:

$$\dot{V}'_G = K_G \cdot \dot{V}_G . \tag{13}$$

Aus diesem korrigierten Volumenstrom der gasförmigen Phase $\dot{V}_G$ lässt sich, auch ein korrigierter Massenstrom $\dot{m}$ jeweils für die gasförmige Phase bestimmen:

$$\dot{m}_G = \rho_G \cdot \dot{V}'_G . \qquad (14)$$

Damit kann mit der gemessenen Dampfqualität x der Gesamtmassenstrom $\dot{m} = \dot{m}_G + \dot{m}_L$ und somit auch der Massenstrom der flüssigen Phase $\dot{m}_L$ bestimmt werden.

$$\dot{m} = \frac{\rho_G \cdot \dot{V}'_G}{x} ,$$

$$\dot{m}_L = \frac{1-x}{x} \rho_G \cdot \dot{V}'_G .$$

Vorteilhaft kann mit diesem Korrekturverfahren die Messunsicherheit des Gesamtmassenstroms in einem großen Messbereich auf $\pm 2\%$ reduziert werden, wodurch eine besonders genaue Messung der Durchflussrate im Vergleich zu einem unkorrigierten Durchflussmessgerät erreicht werden kann.

Schließlich kann die Erfindung vorsehen, dass zur Information eines Messgerät-Benutzers die ermittelten Werte des Massenstromverhältnisses x oder des korrigierten Volumenstroms der gasförmigen Phase $\dot{V}_G$ oder der Massenströme $\dot{m}$, $\dot{m}_G$ und $\dot{m}_L$ ausgegeben werden. Alternativ können alle Werte ausgegeben werden. Das Ausgeben kann mittels eines am Messgerät befindlichen Displays oder einer separaten Anzeigeeinheit erfolgen. Die Messwerte stehen über eine an eine Ausgabeeinheit angeschlossene elektrische Signalleitung oder Datenleitung, auch weiteren Datenverarbeitungseinheiten, wie bspw. einem oder Computer oder Prozessleitsystem zur weiteren Verwertung zur Verfügung. Die Messdaten sind damit online schnell und einfach darstellbar.

Ferner betrifft die Erfindung ein Wirbelströmungsmessgerät zur Bestimmung des Massenstromverhältnisses einer mehrphasigen Strömung, wobei das Wirbelströmungsmessgerät

- einen Staukörper zum Erzeugen von Kärmän'schen Wirbeln in einem strömenden Medium,
- einen, insbesondere stromab oder innerhalb des Staukörpers platzierten, Wirbelsensor zum Erfassen von durch Kärmän'schen Wirbel im strömenden Medium verursachten periodischen Druckschwankungen und zum Erzeugen eines mit den Druckschwankungen korrespondierenden Sensorsignals (S),
- sowie eine mit dem Wirbelsensor elektrisch verbundene Datenverarbeitungseinheit, die dafür eingerichtet ist, basierend auf dem Sensorsignal (S) wenigstens einen das Massenstromverhältnis (x) repräsentierenden Ausgabewert zu generieren,

umfasst.

Vorteilhaft ist bei dieser Vorrichtung möglich, den Massenstromanteil x, sowie alle weiteren benötigten oben genannten Größen für den Korrekturwert aus dem Sensorsignal S im Messgerät selbst zu bestimmen. Dies muss bei anderen Messgeräten dagegen durch zusätzliche Messeinrichtungen erfolgen. Das Messgerät kann vorteilhaft die erforderlichen Messgrößen erfassen, verarbeiten und einem Benutzer schnell und unkompliziert anzeigen oder als Messwert über eine Ausgabeeinheit zur Verfügung stellen..

Das Messgerät kann zur Durchführung der oben beschriebenen Auswertung des Messsignals eine Auswerte-Elektronik aufweisen, die neben der Datenverarbeitungseinheit auch mit dem Sensor verbundene Messschaltungen oder eine separate Mess- und Regelungseinheit zur Erfassung und Berechnung der Messsignale umfassen kann. Die Datenverarbeitungseinheit kann zum Auslesen der berechneten Messdaten auch mit einem separaten Computer oder einem Prozessleitsystem verbunden werden. Die zur Überwachung eines Durchflusses benötigten Daten können hiermit schnell erfasst und weiterverarbeitet werden. Sollte ein Fehler auftreten, kann ein Benutzer zügig eingreifen.

Sollten die Werte für das Massenstromverhältnis x oder der Froude-Zahl eine vorbestimmte Grenze überschreiten bzw. nicht mehr dem Messbereich unterfallen, so kann erfindungsgemäß ein im Messgerät integriertes Alarmsystem integriert sein, wobei neben einer akustischen auch eine optische Warnung an dem Display des Messgeräts ausgegeben werden kann. Ein Beispielhafter Grenz- oder Schwellwert kann etwa eine Dampfqualität von 80% sein. Ferner kann das Alarmsignal auch über die Ausgabeeinheit an die angeschlossenen Feldbusse und damit an das über die Feldbusse verbunden Prozessleitsystem mitgeteilt werden. Damit kann ein Benutzer vorteilhaft gewarnt werden, wenn der Messbereich des Messgeräts nicht eingehalten wird, um Schäden in Anlagen zu vermeiden.

Zur korrigierten Volumenstrombestimmung bzw. die Ermittlung der Korrekturfunktion können alle benötigten Größen, so insbesondere die densiometrische Froude-Zahl Fr und der Massenstromanteil x, im Messgerät selbst gemessen werden. Im Vergleich zum Stand der Technik ist dies damit besonders vorteilhaft, da bei den anderen Messsystemen, wie Venturi Düsen, Blenden oder Konus Differenz-Druckmeter der Massenstromanteil x über ein anderes Messsystem bestimmt werden muss. Die Messung kann dadurch komfortabel und schnell in bestehende Messanlagen integriert oder mobil zur schnellen Messung von Durchflüssen zwei oder mehrphasiger Strömungen eingesetzt werden.

Weitere Ausführungsformen, sowie einige der Vorteile, die mit diesen und weiteren Ausführungsformen verbunden sind, werden durch die nachfolgende ausführliche Beschreibung deutlich und besser verständlich. Unterstützend hierbei ist auch der Bezug auf die Figuren in der Beschreibung. Gegenstände, die im Wesentlichen gleich oder sehr ähnlich sind, können mit denselben Bezugszeichen versehen sein.

Dabei zeigen:

Fig. 1  ein Ablaufdiagramm des erfindungsgemäßen Verfahrens,
Fig. 2  ein Diagramm des Fehlers des gemessenen Massenstroms der gasförmigen Phase über dem Massenstromverhältnis x,
Fig. 3  ein Diagramm einer Anzahl an Messwerte über Residuen zu einer Korrekturfunktion, und
Fig. 4  ein Diagramm der Messunsicherheit des Massenstromverhältnis x in Abhängigkeit der densiometrischen Froude-Zahl Fr.

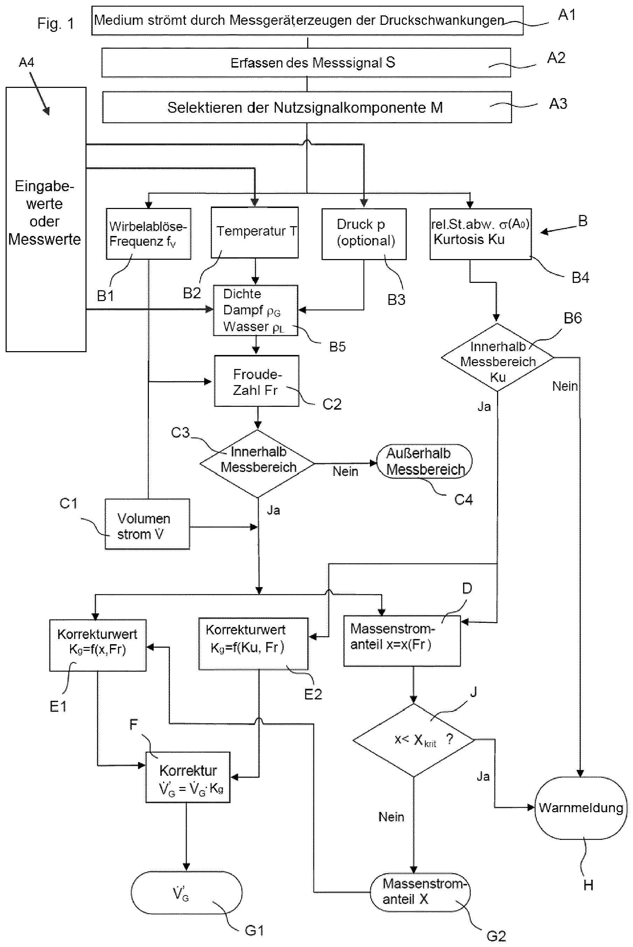

In Fig. 1 ist ein Ablauf der Messung und der vorzunehmenden Berechnungen in einem Wirbelströmungsmessgerät dargestellt. Das Wirbelströmungsmessgerät ist im Wesentlichen aus einem Messrohr gebildet, in dem ein Medium fließt. Ein solches fluides Medium kann flüssig oder gasförmig sein, oder aber zweiphasig mit einer gasförmigen ersten Phase und einer flüssigen zweiten Phase sein. Beispiele für zwei Phasengemische sind Luft und Wasser bzw. Dampf und Wasser oder Öldampf und Öl. Auch andere Phasenzusammensetzungen oder mehr als zwei Phasen sind möglich.

In den Rohrabschnitt hinein erstreckt sich ein Staukörper als Strömungshindernis, an dem sich eine Kármán'sche Wirbelstraße ausbilden kann. Das Wirbelströmungsmessgerät weist zudem einen Mess-Rohrabschnitt auf, der sich in die Strömung erstreckt. Der Mess-Rohrabschnitt weist ferner einen Sensor auf, der als ein mechanisch-elektrischer Wandler arbeitet, wobei in der Regel ein piezoelektrischer oder kapazitiver Wandler verwendet wird.

In Schritt A1 strömt das zu messende Medium durch das Messrohr, wobei sich am Strömungshindernis, dem Staukörper, eine Karman'sche Wirbelstraße entwickelt und mit der Durchflussgeschwindigkeit korrelierende Druckschwankungen erzeugt werden, die in Schritt A2 von einem im Staukörper oder nachfolgend angeordneten Sensor erfasst wird. Hierbei werden die durch die Kármán'schen Wirbel verursachten periodischen Druckschwankungen in ein elektrisches Messsignal gewandelt. und einer Auswerte-Elektronikübermittelt. Die Auswerte-Elektronik ist innerhalb des Messgeräts angeordnet und weist eine Datenverarbeitungseinheit auf, welche das Messsignal in das Sensorsignal S vorzugsweise digital wandelt.

In Schritt A3 wird aus dem Sensorsignal S die Nutzsignalkomponente M selektiert. An dieser Stelle wird zunächst ein schmalbandiger Frequenzbereich um die Wirbelablösefrequenz $f_v$ als Nutzsignalkomponente M ausgewählt Diese enthält sowohl die Information der Wirbelablöseperioden als auch die Information zur Berechnung des Massenstromverhältnisses.

In Schritt A4 wird der Auswerteelektronik des Weiteren Druck und Temperatur des Mediums zur Verfügung gestellt. Dies geschieht entweder durch unmittelbare Eingabe von Werten in das Gerät durch den Nutzer oder aber die Grössen Druck und Temperatur werden durch zusätzliche Sensorik im Wirbelströmungsmessgerät gemessen oder aber über eine Feldbusschnittstelle eingelesen (4-20mA Stromeingang, HART, PA, FF).

Wie oben beschrieben, werden nun die Messsignale ausgewertet; die Schritte B1 bis B4 der Schrittfolge B werden parallel oder in einer vorbestimmten Reihenfolge durchgeführt. Die Nutzsignalkomponente M wird nach der Wirbelablösefrequenz $f_v$ analysiert und letztere bestimmt (Schritt B1) und in der weiteren Auswertung verwendet. Dem Fachmann ist die Bestimmung der Wirbelablösefrequenz $f_v$ aus der Nutzssignalkomponente M bekannt..

Die Nutzsignalkomponente M wird über die Zeit aufgenommen, so dass die zeitliche Schwankung aufgezeichnet werden kann. Die Nutzsignalkomponente wird hiernach über ein Zeitintervall einer statistischen Auswertung unterzogen, wobei neben einer Standardabweichung $\sigma$ auch die Kurtosis Ku in Schritt B4 berechnet wird. Daneben können mittels weiterer Sensoren, die im Mess-Rohrabschnitt angeordnet sind, Messgrößen wie Temperatur T (Schritt B2) oder optional auch der Druck p (Schritt B3) gemessen oder eingegeben werden.

Aus dem Messsignal M und der Temperatur T und ggf. dem Druck p können im weiteren Zusammenhang in Schritt B5 physikalische Größen, wie die Dichte $\rho$ des Mediums, Dichte der gasförmigen Phase $\rho_G$ sowie Dichte der flüssigen Phase $\rho_L$ bestimmt werden. Die Dichten der beiden Phasen können je nach Anforderung entweder intern im Messgerät oder extern mittels geeigneter Sensoren gemessen werden. Die Dichten können aber auch von außen eingegeben werden oder vorbestimmt in der Auswerte-Elektronik implementiert sein, falls die durchströmenden Medien und deren Dichten bekannt sind.

Im darauffolgenden Schritt C2 wird die Froude-Zahl Fr, insbesondere die densiometrische Froude-Zahl Fr' unter Zuhilfenahme der in Schritt B1 bestimmen Wirbelablösefrequenz $f_v$ errechnet, wie auch aus Gleichung (8) ersichtlich ist. Vorrangig wird eine densiometrische Froude-Zahl Fr' bestimmt, die durch die spezifischen Werte des Messgeräts an die jeweilige Messsituation angepasst wird.

Berechnungsschritte C3 und B6 überprüfen, ob jeweils die Kurtosis Ku bzw. die densiometrische Froude-Zahl Fr in einem vorbestimmten Messbereich liegen.

Sind die Werte außerhalb der Messbereiche, so bspw. bei einer Ku grösser als 3, der Wert "Massenstromanteil unter Minimum" (Schritt H) zurückgegeben. Dies zeigt an, dass der Massenstromanteil x zu klein ist. Die Meldung kann als Warnmeldung zurückgegeben werden, wobei das Messgerät eine akustische oder optische Warnmeldung ausgibt. Dazu können die Werte auf einer Anzeigeeinheit, wie einem Display direkt an dem Messgerät ausgegeben werden. Ferne kann auch ein Alarmsignal über eine an die Ausgabeeinheit angeschlossene Feldbusschnittstelle (4-20mA, HART, PA, FF) ausgegeben werden.

Für eine Froude-Zahl außerhalb des Messbereichs wird ebenfalls der Wert "außerhalb des Messbereichs" in Schritt C4 ausgegeben. In beiden Fällen ist die Auswertung zu Ende und es wird ebenfalls eine Warnung ausgegeben.

Sind in beiden Abfragefällen (Schritte C3 und B6) die Werte innerhalb des vorbestimmten Messbereichs, wird die Berechnung fortgeführt und der Schritt J als nächstes ausgeführt.

Ferner wird in Schritt C1 der Volumenstrom $\dot{V}_G$ aus der Wirbelablösefrequenz $f_V$ bestimmt. In Schritt D wird daraufhin, unter Verwendung der Frequenz $f_V$, der Dichten $\rho_G$, $\rho_L$ der beiden Phasen oder auch der Froude-Zahl Fr insbesondere der densiometrischen Froude-Zahl Fr' und der Kurtosis Ku, der Massenstromanteil x berechnet, wie in Gleichungen (5) bis (7) beschrieben ist.

In Schritt J erfolgt eine Abfrage, ob der berechnete Wert des Massenstromanteils x unterhalb eines Minimums fällt. Falls ja, wird ebenfalls zu Schritt H geleitet (siehe oben), anderenfalls wird der Wert des Massenstromanteils x in Schritt G2 zurückgegeben und der Ermittlung der Funktion zur Ermittelung des Korrekturwerts $K_G$ in Schritt E1 zur Verfügung gestellt.

In den Schritten E1 und E2 können jeweils Korrekturwerte für den gasförmigen Volumenstrom $\dot{V}_G$ aus dem Massenstromanteil x und der densiometrischen Froude-Zahl Fr', wie es in Gleichung (12) gezeigt wurde, oder aus der Kurtosis Ku und der densiometrischen Froude-Zahl Fr', berechnet werden. Die verwendete Korrekturfunktion kann nach den jeweiligen Anforderungen an die Messfehler ausgewählt oder auch in Kombination verwendet werden.

Schließlich kann in Schritt F der gasförmige Volumenstrom $\dot{V}_G$ mit dem Korrekturwert $K_G$ nach Gleichung (13) korrigiert werden und hiernach als korrigierter gasförmiger Volumenstrom $\dot{V}'_G$ ausgegeben werden (Schritt G1).

Aus dem korrigierten gasförmigen Volumenstrom $\dot{V}'_G$ können ferner die Massenströme $\dot{m}_G$ und $\dot{m}_L$ jeweils der einzelnen Phasen sowie der Gesamtmassenstrom $\dot{m}_{Tot}$ berechnet und ausgegeben werden (Figurativ nicht dargestellt).

Die Schrittabfolge ist hierbei nicht unbedingt sequentiell durchzuführen, sondern kann auch parallel implementiert werden.

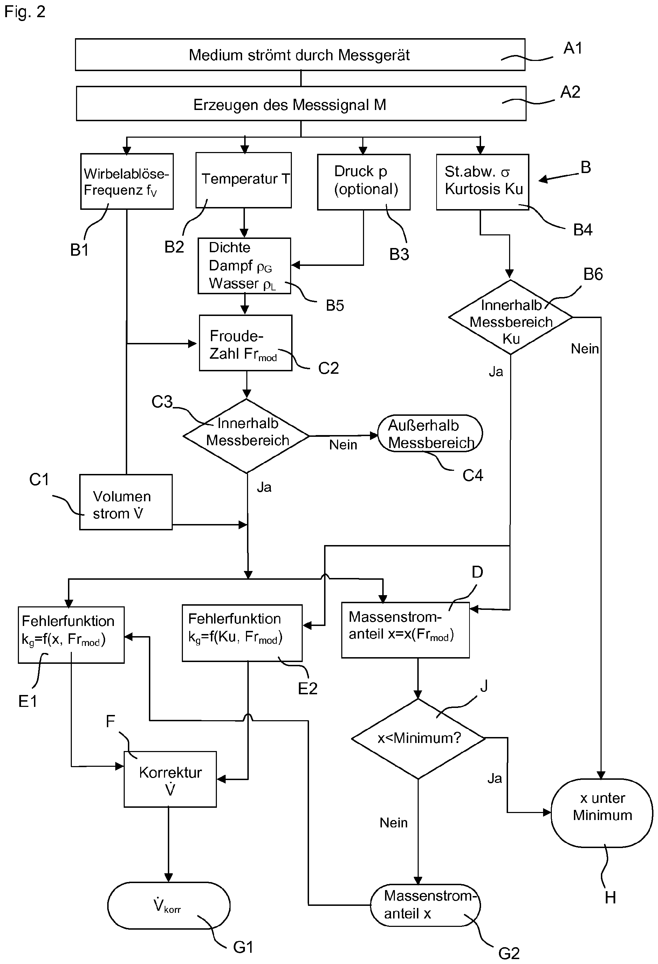

In Fig. 2 sind die Messwerte für Froude-Zahlen Fr von 1 bis 1,9 dargestellt. In diesem Bereich ist der Einfluss der Froude-Zahl so gering, so dass diese Messwerte zusammen in einem Diagramm dargestellt werden können. Dazu wurde der Verlauf einer Nähe der Korrekturfunktion für Fr = 1,4 aufgezeichnet. Zudem sind ein 95 % Vertrauensband VB und ein Prognoseband PB dargestellt. Das Vertrauensband VB sagt dabei aus, welcher Verlauf der Korrekturfunktion anhand der vorhandenen Messwerte plausibel ist. Das Prognoseband PB definiert die Grenzen worin zukünftige Messwerte mit einer 95%-igen Wahrscheinlichkeit streuen werden. Dem Fachmann ist die Bestimmung dieser Bänder aus dem Stand der Technik bekannt. Hierbei wurde bei Messungen beobachtet, dass es keinen systematischen Einfluss vom Druck des im Messgerät fließenden Mediums gibt, weshalb er in diesen Berechnungen lediglich optional gemessen werden kann.

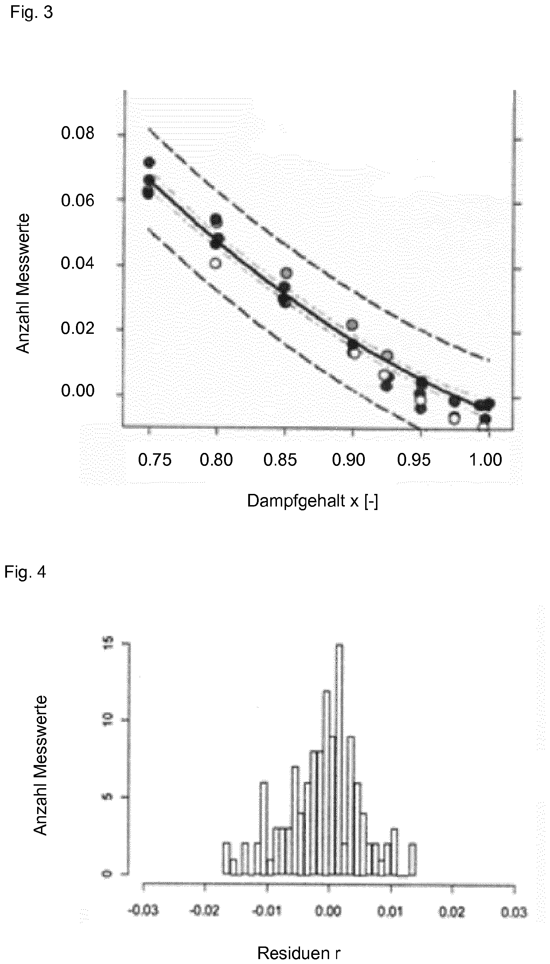

Um ein Maß für die Reduzierung des Fehlers im Gesamten zu erhalten, kann der Fehler $FE_m$ des korrigierten Volumenstroms $\dot{V}'_G$ durch einfache Fehlerrechnung abgeschätzt werden und mit dem vorher gemessenen Fehler $E_m$ verglichen werden. In **Fig. 3** sind die Residuen r der Korrekturfunktion gezeigt, die die Abweichungen des gemessenen Fehlers $E_m$ zu dem mit der Korrekturfunktion berechneten Fehlers $FE_m$ darstellen.

$$r = E_{\dot{m}} - FE_{\dot{m}}. \tag{15}$$

Die Werte der Residuen r liegen im Bereich von ±1,5% und haben eine relative Standardabweichung σ von ca. 0,6%.

Die Standardmessunsicherheit des Massenstromanteiles x ist hierbei in **Fig. 4** dargestellt. Dabei ist der Massenstromanteil x über der Froude-Zahl Fr aufgetragen, wobei vorzugsweise ein Messbereich von 0,75 - 1 für den Massenstromanteil x verwendet wird (gestrichelte Linie). Die Standardmessunsicherheit ist dabei als durchgezogene Linien für unterschiedliche Massenstromanteilwerte erkennbar. Zur unteren Grenze 0,75 hin erhöht sich der Messfehler $E_m$ leicht um bis zu 0,5 % Punkte.

Es kann auch eine totale Messunsicherheit gemäß DIN13005:1999 betrachtet werden, wobei für den berechneten Korrekturwert die gesamte Messunsicherheit nach dem Gauß'schen Fehlerfortpflanzungsgesetz berechnet werden kann. Die totale Messunsicherheit wird in der Regel auf einem 2-Sigma Niveau angegeben; diese Angabe bedeutet, dass von den durchgeführten Messungen 95 % innerhalb dieser angegebenen Messunsicherheit liegen.

Dazu wird der korrigierte Massenstrom der gasförmigen Phase

$$\underline{\dot{m}}_G = \dot{m}_G \cdot (1 - E_{\dot{m}}) \tag{16}$$

mit dem Massenstromanteil x zum Gesamtmassenstrom $\underline{m}_{Ges}$

$$\underline{\dot{m}}_{Ges} = \frac{\underline{\dot{m}}_G}{x} \tag{17}$$

berechnet, woraus die Messunsicherheit des Gesamtmassenstroms folgt:

$$\Delta \dot{m}_{Ges,2\sigma} = 2 \cdot \sqrt{\left( \frac{\partial \underline{\dot{m}}_{Ges}}{x} \cdot \Delta x \right)^2 + \left( \frac{\partial \underline{\dot{m}}_{Ges}}{E_{\dot{m}}} \cdot \Delta E_{\dot{m}} \right)^2} \; . \tag{18}$$

Hierbei ergibt sich, dass die totale Messunsicherheit bei einem Massenstromanteil von x = 0,9 bei ungefähr bei 2% liegt. Mit sinkendem Massenstromanteil steigt diese auf 2,7% an. Der Grund für diesen Anstieg ist die höhere Messunsicherheit des Massenstromanteiles x in diesem Bereich.

Die vorliegende Erfindung ist nicht auf die, unter Bezugnahme auf die Figuren erläuterten Ausführungsbeispiele beschränkt. Insbesondere können auch alternative, statistische Auswertemöglichkeiten angewendet werden.. Daneben bestehen auch noch weitere, dem Fachmann geläufige Methoden zur Auswertung der oben genannten Messsignalkomponenten sowie zur Bestimmung der Wirbelablösefrequenz aus dem Messsignal.

**Bezugszeichenliste**

| | |
|---|---|
| M | Nutzsignalkomponente |
| S | Sensorsignal |
| $f_V$ | Wirbelablösefrequenz |
| $E_m$ | Messfehler Massenstrom |
| x | Massenstromanteil |
| T | Temperatur |
| p | Druck |
| $\rho_G$, $\rho_L$ | Dichte, gasförmige und flüssige Phase |
| $\sigma$ | (relative) Standardabweichung |
| Ku | Kurtosis |
| Fr | Froude-Zahl |
| Fr' | Densiometrische Froude-Zahl |
| $\dot{V}$ | Volumenstrom |
| $\dot{m}$ | Massenstrom |
| A - J | Verfahrens- und Berechnungsschritte |

**Patentansprüche**

1.  Verfahren zur Bestimmung des Massenstromverhältnisses (x) eines in einem Messrohr strömenden zumindest zeitweise zwei- oder mehrphasigen Mediums, mit einer gasförmigen ersten Phase die mit einer ersten Massen-

stromrate $\dot{m}_G$ strömt und mit einer flüssigen zweiten Phase die mit einer zweiten Massenstromrate $\dot{m}_L$ strömt, mittels eines Wirbelströmungsmessgerätes, das einen in das strömende Medium hineinragenden Staukörper und einen, insbesondere stromab oder innerhalb des Staukörpers platzierten, Wirbelsensor aufweist, wobei die gasförmige Phase eine erste Dichte ($\rho_G$) aufweist, die von einer zweiten Dichte ($\rho_L$) der flüssigen Phase verschieden ist, umfassend:

Erzeugen von *Kármán'schen* Wirbeln im strömenden Medium zumindest im Bereich des Wirbelsensors mittels des Staukörpers, wobei die Wirbel mit einer von einer momentanen Strömungsgeschwindigkeit des strömenden Mediums abhängigen Wirbelablösefrequenz ($f_v$) vom Staukörper abgelöst werden;

Erfassen von durch die Kármán'schen Wirbel im strömenden Medium verursachten periodischen Druckschwankungen mittels des Wirbelsensors zum Erzeugen eines mit den Druckschwankungen korrespondierenden Sensorsignals (S);

Selektieren einer Nutzsignalkomponente (M) aus dem Sensorsignal S, die ein, insbesondere. schmales, die Wirbelablösefrequenz enthaltendes Frequenzband aufweist, insbesondere mit einer relativen Bandbreite kleiner als 50% der momentanen Wirbelablösefrequenz;

Ermitteln einer, insb. densiometrischen, Froude-Zahl (Fr; Fr'), wobei die Froude-Zahl (Fr) eine von einem Durchmesser (D) des Messrohres, einer Leerrohrgeschwindigkeit ($u_{GS}$) der gasförmigen ersten Phase, und einer

$$Fr = \frac{u_{GS}}{\sqrt{D \cdot g}},$$

Erdbeschleunigung (g), insb. gemäss der Rechenvorschrift: abhängige charakteristische Grösse des im Messrohr strömenden zwei- bzw. mehrphasigen Mediums ist;

Verwenden der Nutzsignalkomponente (M) und der Froude-Zahl (Fr; Fr') zum Bestimmen eines Massenstromverhältnisses (x) des strömenden Mediums, wobei das Massenstromverhältnis (x) als ein Verhältnis des ersten Massenstroms $\dot{m}_G$ zu einem Gesamtmassenstrom mit dem das Medium strömt definiert ist, insb. gemäss einer

$$x = \frac{\dot{m}_G}{\dot{m}_L + \dot{m}_G}.$$

Rechenvorschrift:

2. Verfahren nach dem vorherigen Anspruch, weiters umfassend:
Ermitteln wenigstens eines Schwankungswertes der Nutzsignalkomponente (M) über ein, insb. sich über mehrere Perioden der Druckschwankungen der Strömung erstreckendes, Zeitintervall, insb. eine Standardabweichung ($\sigma$) eines Amplitudenverlaufs der Nutzsignalkomponente und/oder einer Kurtosis (Ku) der Nutzsignalkomponente.

3. Verfahren nach dem vorherigen Anspruch, weiters umfassend:
Verwenden des wenigstens einen Schwankungswertes der Nutzsignalkomponente (M) zum Ermitteln des Massenstromverhältnisses (x).

4. Verfahren nach einem der vorherigen Ansprüche, weiters umfassend:
Ermitteln einer Empfindlichkeit des Wirbelsensors, nämlich einer momentanen Abhängigkeit einer Amplitude der Nutzsignalkomponente (M) von den erfassten Druckschwankungen der ersten Dichte $\rho_G$ und dem Massenstromverhältnis (x).

5. Verfahren nach dem vorherigen Anspruch, weiters umfassend:
Verwenden der Empfindlichkeit des Wirbelsensors zum Ermitteln des Massenstromverhältnisses (x).

6. Verfahren nach einem der vorherigen Ansprüche, umfassend:
Ermitteln der Wirbelablösefrequenz ($f_v$) anhand des Sensorsignals (S), insb. basierend auf der Nutzsignalkomponente (M).

7. Verfahren nach dem vorherigen Anspruch, weiters umfassend:
Verwenden der Wirbelablösefrequenz ($f_v$) zum Ermitteln des Massenstromverhältnisses (x).

8. Verfahren nach einem dem vorherigen Ansprüche, weiters umfassend:
Ermitteln einer densiometrischen Froude-Zahl (Fr'), die einer mit einem Verhältnis der Dichten gemäss der Rechen-

$$Fr' = \sqrt{\frac{\rho_G}{\rho_L - \rho_G}} \cdot \frac{u_{GS}}{\sqrt{D \cdot g}} = \sqrt{\frac{\rho_G}{\rho_L - \rho_G}} \cdot Fr$$

vorschrift korrigierten Froude-Zahl entspricht.

9. Verfahren nach einem der vorherigen Ansprüche, umfassend:

   Ermitteln, insb. durch Eingeben und/oder Messen, der Dichte ($\rho_L$, $\rho_G$) für jede der beiden Phasen und Verwenden der ermittelten Dichten ($\rho_L$, $\rho_G$) zur Bestimmung des Massenstromverhältnisses (x); und/oder
   Ermitteln, insb. durch Eingeben und/oder Messen, einer Temperatur (T) und/oder Ermitteln, insb. durch Eingeben und/oder Messen, eines Drucks (p) innerhalb des zweiphasigen Mediums zum Ermitteln der ersten Dichte ($\rho_G$) der gasförmigen Phase sowie der zweiten Dichte ($\rho_G$) der flüssigen Phase.

10. Verfahren nach einem der vorherigen Ansprüche, umfassend: Ermitteln eines Volumenstroms ($\dot{V}_G$) der gasförmigen Phase basierend auf der Wirbelablösefrequenz ($f_V$).

11. Verfahren nach dem vorherigen Anspruch, weiters umfassend:

   Ermitteln eines vom Massenstromverhältnis (x) abhängigen Korrekturwerts ($K_G$) für den Volumenstrom ($\dot{V}_G$) der gasförmigen Phase, welcher Korrekturwert ($K_G$) eine Abhängigkeit der Wirbelablösefrequenz ($f_V$) vom Massenstromverhältnis (x) kompensiert;
   und Verwenden der Froude-Zahl (Fr; Fr') zum Ermitteln des Korrekturwerts ($K_G$).

12. Verfahren nach Anspruch 11 oder einem davon abhängigen Anspruch, weiters umfassend:
   Verwenden des Korrekturwerts ($K_G$) sowie des ermittelten Volumenstroms ($\dot{V}_G$) zum Ermitteln eines Ausgabewerts ($\dot{V}'_G$) für den Volumendurchfluss der gasförmigen Phase, insbesondere gemäss der Rechenvorschrift $\dot{V}'_G = K_G \cdot \dot{V}_G$.

13. Verfahren nach einem der vorherigen Ansprüche, weiters umfassend:

   Ermitteln eines Ausgabewerts (*X*) für das Massenstromverhältnis (x),
   und
   Anzeigen nämlichen Ausgabewerts (*X*) für das Massenstromverhältnis (x).

14. Verfahren nach einem der vorherigen Ansprüche, weiters umfassend:

   Vergleichen des ermittelten Massenstromverhältnisses (x) mit einem dafür vorgegebenen Vergleichswert, der ein, insb. messstellenspezifisches, kritisches bzw. unerwünschtes Massenstromverhältnis ($X_{krit}$) repräsentiert, und
   Ausgeben einer Warnung bzw. Diagnosemitteilung bei Feststellen einer Abweichung des ermittelten Massenstromverhältnisses (x) vom Vergleichswert.

15. Wirbelströmungsmessgerät zur Verwirklichung eines Verfahrens gemäss eines der vorherigen Ansprüche, welches Wirbelströmungsmessgerät umfasst:

   einen Staukörper zum Erzeugen von *Kármán'schen* Wirbeln in einem strömenden Medium;
   einen, insbesondere stromab oder innerhalb des Staukörpers platzierten, Wirbelsensor zum Erfassen von durch Kármán'schen Wirbel im strömenden Medium verursachten periodischen Druckschwankungen und zum Erzeugen eines mit den Druckschwankungen korrespondierenden Sensorsignals (S); sowie
   eine mit dem Wirbelsensor elektrisch verbundene Datenverarbeitungseinheit, die dafür eingerichtet ist, basierend auf dem Sensorsignal (S) wenigstens einen das Massenstromverhältnis (x) repräsentierenden Ausgabewert zu generieren.

## Claims

1. Procedure for determining the mass flow ratio (x) of a medium which is at least temporarily two-phase or multi-phase and flows through a measuring tube, with a gaseous first phase which flows at a first mass flow rate $m_G$ and with a liquid second phase which flows at a second mass flow rate $m_L$, using a vortex flowmeter, which has a bluff body projecting into the flowing medium and a vortex sensor, particularly located downstream or inside the bluff body, wherein the gaseous phase has a first density ($\rho_G$), which is different from a second density ($\rho_L$) of the liquid phase, comprising:

Generation de Karman vortices in the flowing medium, at least in the area of the vortex sensor, using the bluff body, wherein the vortices are shed by the bluff body at a vortex shedding frequency ($f_v$) that depends on a current flow velocity of the flowing medium;

Recording of period pressure fluctuations, caused by the Karman vortices in the flowing medium, using the vortex sensor with a view to generating a sensor signal (S) corresponding to the pressure fluctuations;

Selection of a useful signal component (M) from the sensor signal S, said component having a frequency band, particularly a narrow band, containing the vortex shedding frequency, particularly with a relative bandwidth less than 50 % of the current vortex shedding frequency;

Determination of a Froude number (Fr, Fr'), particularly densiometric, wherein the Froude number (Fr) is a characteristic variable of the two-phase or multi-phase medium flowing through the measuring tube which depends on a diameter (D) of the measuring tube, an empty pipe velocity ($u_{GS}$) of the first gaseous phase and a gravitational velocity (g), particularly according to the calculation rule:

$$Fr = \frac{u_{GS}}{\sqrt{D \cdot g}}$$

Use of the useful signal component (M) and the Froude number (Fr, Fr') to determine a mass flow ratio (x) of the flowing medium, wherein the mass flow ratio (x) is defined as a ratio of the first mass flow rate $m_G$ to the total mass flow rate at which the medium flows, particularly according to the calculation rule:

$$x = \frac{\dot{m}_G}{\dot{m}_L + \dot{m}_G} \, .$$

2. Procedure as claimed in the previous claim, further comprising:
Determination of at least one fluctuation value of the useful signal component (M) over a time interval, particularly extending over several periods of pressure fluctuations of the flow, particularly a standard deviation ($\sigma$) of an amplitude curve of the useful signal component and/or of a kurtosis (Ku) of the useful signal component.

3. Procedure as claimed in the previous claim, further comprising:
Use of the at least one fluctuation value of the useful signal component (M) to determine the mass flow ratio (x).

4. Procedure as claimed in one of the previous claims, further comprising:
Determination of a sensitivity of the vortex sensor, specifically a current dependency of an amplitude of the useful signal component (M) on the recorded pressure fluctuations of the first density $\rho_G$ and the mass flow ratio (x).

5. Procedure as claimed in the previous claim, further comprising:
Use of the sensitivity of the vortex sensor to determine the mass flow ratio (x).

6. Procedure as claimed in one of the previous claims, further comprising:
Determination of the vortex shedding frequency ($f_v$) using the sensor signal (S), particularly based on the useful signal component (M).

7. Procedure as claimed in the previous claim, further comprising:
Use of the vortex shedding frequency ($f_v$) to determine the mass flow ratio (x).

8. Procedure as claimed in one of the previous claims, further comprising:
Determination of a densiometric Froude number (Fr'), which corresponds to a Froude number corrected with a ratio of the densities according to the calculation rule

$$Fr' = \sqrt{\frac{\rho_G}{\rho_L - \rho_G}} \cdot \frac{u_{GS}}{\sqrt{D \cdot g}} = \sqrt{\frac{\rho_G}{\rho_L - \rho_G}} \cdot Fr$$

**9.** Procedure as claimed in one of the previous claims, further comprising:

Determination of the density ($\rho_L$, $\rho_G$), particularly by entering and/or measuring, for each of the two phases and use of the densities ($\rho_L$, $\rho_G$) determined to determine the mass flow ratio (x);
and/or
Determination of a temperature (T), particularly by entering and/or measuring, and/or determination of a pressure (p), particularly by entering and/or measuring, in the two-phase medium to determine the first density ($\rho_G$) of the gaseous phase as well as the second density ($\rho_G$) of the liquid phase.

**10.** Procedure as claimed in one of the previous claims, comprising:
Determination of a volume flow ($V_G$) of the gaseous phase based on the vortex shedding frequency ($f_v$).

**11.** Procedure as claimed in the previous claim, further comprising :

Determination of a correction value ($K_G$) that depends on the mass flow ratio (x) for the volume flow ($V_G$) of the gaseous phase, said correction value ($K_G$) compensating a dependence of the vortex shedding frequency ($f_v$) on the mass flow ratio (x);
and
Use of the Froude number (Fr, Fr') to determine the correction value ($K_G$).

**12.** Procedure as claimed in Claim 11 or a dependent claim, further comprising:
Use of the correction value ($K_G$) and the determined volume flow ($V_G$) to determine an output value ($V'_G$) for the volume flow of the gaseous phase, particularly according to the calculation rule:

$$V'_G = K_G \cdot V_G.$$

**13.** Procedure as claimed in one of the previous claims, further comprising :

Determination of an output value (X) for the mass flow ratio (x),
and
Display of said output value (X) for the mass flow ratio (x).

**14.** Procedure as claimed in one of the previous claims, further comprising:

Comparison of the determined mass flow ratio (x) with a reference value specified for this purpose, which represents a mass flow ratio ($X_{krit}$), particularly a mass flow ratio that is specific to the measuring point, critical or undesirable, and
Outputting of a warning or a diagnostic message if a deviation of the determined mass flow ratio (x) from the reference value is determined.

**15.** Vortex flowmeter to implement a procedure as claimed in one of the previous claims, said vortex flowmeter comprising:

a bluff body designed to generate Karman vortices in a flowing medium;
a vortex sensor, particularly located downstream or inside the bluff body, said sensor being designed to detect periodic pressure fluctuations caused by Karman vortices in the flowing medium, and to generate a sensor signal (S) corresponding to the pressure fluctuations; as well as
a data processing unit that is electrically connected to the vortex sensor, said unit being designed to generate at least one output value representing the mass flow ratio (x) on the basis of the sensor signal (S).

**Revendications**

1. Procédé destiné à la détermination du rapport de débit massique (x) d'un produit au moins temporairement biphasique ou polyphasique s'écoulant dans un tube de mesure, avec une première phase gazeuse qui s'écoule à un premier débit massique $m_G$ et avec une deuxième phase liquide qui s'écoule à un deuxième débit massique $m_L$, au moyen d'un débitmètre vortex, qui présente un corps de retenue s'avançant dans le produit en écoulement et un capteur vortex, notamment placé en aval ou à l'intérieur du corps de retenue, la phase gazeuse présentant une première densité ($\rho_G$), qui diffère d'une deuxième densité ($\rho_L$) de la phase liquide, comprenant :

   Génération de tourbillons de Karman dans le produit en écoulement, au moins dans la zone du capteur vortex, au moyen du corps de retenue, les tourbillons étant détachés du corps de retenue à une fréquence de détachement des tourbillons ($f_v$) dépendant de la vitesse d'écoulement momentanée du produit en écoulement ;
   Détection des fluctuations de pression périodiques, occasionnées par les tourbillons de Karman dans le produit en écoulement, au moyen du capteur vortex en vue de générer un signal capteur (S) correspondant aux fluctuations de pression ;
   Sélection d'une composante de signal utile (M) à partir du signal capteur S, laquelle composante présente une bande de fréquence, notamment étroite, contenant la fréquence de détachement des tourbillons, notamment avec une largeur de bande relative inférieure à 50 % de la fréquence de détachement des tourbillons momentanée ;
   Détermination d'un nombre de Froude (Fr, Fr'), notamment densiométrique, le nombre de Froude (Fr) étant une grandeur caractéristique du produit biphasique ou polyphasique s'écoulant dans le tube de mesure, laquelle grandeur dépend d'un diamètre (D) du tube de mesure, d'une vitesse de tube vide ($u_{GS}$) de la première phase gazeuse et d'une accélération de la pesanteur (g), notamment selon la règle de calcul :

   $$Fr = \frac{u_{GS}}{\sqrt{D \cdot g}}$$

   Utilisation de la composante de signal utile (M) et du nombre de Froude (Fr, Fr') pour la détermination d'un rapport de débit massique (x) du produit en écoulement, le rapport de débit massique (x) étant défini en tant que rapport entre le premier débit massique $m_G$ et le débit massique total avec lequel le produit s'écoule, notamment selon une règle de calcul :

   $$x = \frac{\dot{m}_G}{\dot{m}_L + \dot{m}_G} \,.$$

2. Procédé selon la revendication précédente, comprenant en outre :
   Détermination d'au moins une valeur de fluctuation de la composante de signal utile (M) sur un intervalle de temps, notamment s'étendant sur plusieurs périodes des fluctuations de pression de l'écoulement, notamment un écart-type ($\sigma$) d'une courbe d'amplitude de la composante de signal utile et/ou d'un kurtosis (Ku) de la composante de signal utile.

3. Procédé selon la revendication précédente, comprenant en outre :
   Utilisation de l'au moins une valeur de fluctuation de la composante de signal utile (M) pour la détermination du rapport de débit massique (x).

4. Procédé selon l'une des revendications précédentes, comprenant en outre :
   Détermination d'une sensibilité du capteur vortex, à savoir une dépendance momentanée d'une amplitude de la composante de signal utile (M) en fonction des fluctuations de pression détectées de la première densité $\rho_G$ et du rapport de débit massique (x).

5. Procédé selon la revendication précédente, comprenant en outre :
   Utilisation de la sensibilité du capteur vortex pour la détermination du rapport de débit massique (x).

6. Procédé selon l'une des revendications précédentes, comprenant en outre :
   Détermination de la fréquence de détachement des tourbillons ($f_v$) au moyen du signal capteur (S), notamment en se basant sur la composante de signal utile (M).

**7.** Procédé selon la revendication précédente, comprenant en outre :
Utilisation de la fréquence de détachement des tourbillons ($f_v$) pour la détermination du rapport de débit massique (x).

**8.** Procédé selon l'une des revendications précédentes, comprenant en outre :
Détermination d'un nombre de Froude (Fr') densiométrique, qui correspond à un nombre de Froude corrigé avec un rapport des densités selon la règle de calcul

$$Fr' = \sqrt{\frac{\rho_G}{\rho_L - \rho_G}} \cdot \frac{u_{GS}}{\sqrt{D \cdot g}} = \sqrt{\frac{\rho_G}{\rho_L - \rho_G}} \cdot Fr$$

**9.** Procédé selon l'une des revendications précédentes, comprenant en outre :

Détermination, notamment par saisie et/ou mesure, de la densité ($\rho_L$, $\rho_G$) pour chacune des deux phases et utilisation des densités déterminées ($\rho_L$, $\rho_G$) pour la détermination du rapport de débit massique (x) ;
et/ou
Détermination, notamment par saisie et/ou mesure, d'une température (T) et/ou détermination, notamment par saisie et/ou mesure, d'une pression (p) dans le produit biphasé pour déterminer la première densité ($\rho_G$) de la phase gazeuse ainsi que la deuxième densité ($\rho_G$) de la phase liquide.

**10.** Procédé selon l'une des revendications précédentes, comprenant :
Détermination du débit volumique ($V_G$) de la phase gazeuse en se basant sur la fréquence de détachement des tourbillons ($f_v$).

**11.** Procédé selon la revendication précédente, comprenant en outre :

Détermination d'une valeur de correction ($K_G$) dépendant du rapport de débit massique (x) pour le débit volumique ($V_G$) de la phase gazeuse, laquelle valeur de correction ($K_G$) compense une dépendance de la fréquence de détachement des tourbillons ($f_v$) en fonction du rapport de débit massique (x) ;
et
Utilisation du nombre de Froude (Fr, Fr') pour la détermination de la valeur de correction ($K_G$).

**12.** Procédé selon la revendication 11 ou toute revendication en dépendant, comprenant en outre :
Utilisation de la valeur de correction ($K_G$) ainsi que du débit volumique ($V_G$) déterminé pour la détermination d'une valeur de sortie ($V'_G$) pour le débit volumique de la phase gazeuse, notamment selon la règle de calcul : $V'_G = K_G \cdot V_G$.

**13.** Procédé selon l'une des revendications précédentes, comprenant en outre :

Détermination d'une valeur de sortie (X) pour le rapport de débit massique (x), et
Affichage de la dite valeur de sortie (X) pour le rapport de débit massique (x).

**14.** Procédé selon l'une des revendications précédentes, comprenant en outre :

Comparaison du rapport de débit massique (x) déterminé avec une valeur de comparaison prévue à cette fin, laquelle représente un rapport de débit massique ($X_{krit}$), notamment spécifique au point de mesure, critique ou indésirable, et
Émission d'un avertissement ou d'un message de diagnostic en cas de constatation d'un écart du rapport de débit massique (x) par rapport à la valeur de comparaison.

**15.** Débitmètre vortex destiné à la réalisation d'un procédé selon l'une des revendications précédentes, lequel débitmètre vortex comprend :

un corps de retenue destiné à la génération de tourbillons de Karman dans un produit en écoulement ;
un capteur vortex, notamment placé en aval ou à l'intérieur du corps de retenue, lequel capteur est destiné à détecter les fluctuations de pression périodiques occasionnées par les tourbillons de Karman dans le produit en écoulement, et à générer un signal capteur (S) correspondant avec les fluctuations de pression ; ainsi que une unité de traitement de données reliée électriquement avec le capteur vortex, laquelle unité est conçue de telle sorte à générer sur la base du signal capteur (S) au moins une valeur de sortie représentant le rapport de débit massique (x).

Fig. 1

Medium strömt durch Messgerät erzeugen der Druckschwankungen — A1

Erfassen des Messsignal S — A2

Selektieren der Nutzsignalkomponente M — A3

A4

Eingabe-werte oder Messwerte

Wirbelablöse-Frequenz $f_V$ — B1

Temperatur T — B2

Druck p (optional) — B3

rel.St.abw. $\sigma(A_0)$ Kurtosis Ku — B4

B

Dichte Dampf $\rho_G$ Wasser $\rho_L$ — B5

Innerhalb Messbereich Ku — B6

Ja / Nein

Froude-Zahl Fr — C2

C3 Innerhalb Messbereich

Nein → Außerhalb Messbereich — C4

Ja

C1 Volumen strom $\dot{V}$

Korrekturwert $K_g=f(x,Fr)$ — E1

Korrekturwert $K_g=f(Ku, Fr)$ — E2

Massenstrom-anteil x=x(Fr) — D

$x < X_{krit}$ ? — J

Nein / Ja

F Korrektur $\dot{V}'_G = \dot{V}_G \cdot K_g$

$\dot{V}'_G$ — G1

Massenstrom-anteil X — G2

Warnmeldung — H

Fig. 2

Fig. 3

Fig. 4

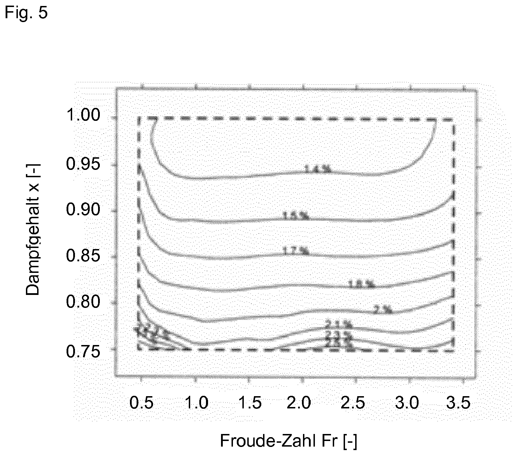

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009001525 A1

- DE 102009001526 A1